# EUROPEAN PATENT APPLICATION

(11) **EP 1 898 416 A1**
(43) Date of publication of application: **12.03.2008**
(21) Application number: 07253454.8
(22) Date of filing: 31.08.2007
(51) Int. Cl.: G11B 27/034, G11B 27/28, G11B 27/10, H04N 5/76, G10H 1/36

(54) **Method, program and apparatus for generating scenario for music-and-image-synchronized motion picture**

(30) Priority: 06.09.2006 JP 2006241465
(71) Applicant: FUJIFILM Corporation, Minato-ku Tokyo (JP)
(72) Inventor: Miyasaka, Yasumasa, Fujifilm Software Co., Ltd., Asao-ku, Kawasaki-shi, Kanagawa (JP); Terayoko, Hajime, Asaka-shi, Saitama (JP)
(74) Representative: Stevens, Jason Paul

(57) **Abstract**

The present invention provides a method for generating a scenario for a music-and-image-synchronized motion picture comprising the steps of: extracting (S1) characteristics of music; extracting (S2) structure of the music on the basis of the extracted characteristics of the music and dividing the music into multiple components on the basis of the result of the extraction; analyzing (S3) characteristics of images; associating (S4, S5) the music and the images with each other according to the characteristics corresponding to the components of the music and the characteristics of the images; and generating (S6) a motion picture scenario that enables the associated music and images to be synchronously reproduced. According to the invention, since a component of music and images are associated with each other according to the characteristics of the images, it is possible to synchronously reproduce images that match the contents of music being reproduced, in comparison with the conventional synchronous reproduction.

## Description

### BACKGROUND OF THE INVENTION

### Field of the Invention

The present invention relates to a technique for generating a motion picture synchronized with music.

### Description of the Related Art

In Japanese Patent Application Laid-Open No. 2004-96617, video editing is performed by extracting tempo information from music data and performing cut editing of image data on the basis of the tempo information.

National Publication of International Patent Application No. 2005-506643 discloses a system in which a descriptor is analyzed from input material; style information is defined on the basis of the analysis; a work set is created on the basis of the input material, the descriptor obtained from the input material and the style information; and output data is generated by executing the work set. At least one motion picture data and at least one audio data are included in input/output, and the descriptor can be obtained by analyzing the input material. The descriptor can be also received from a user.

### SUMMARY OF THE INVENTION

The quality of an output motion picture is considerably influenced by consideration of correlation between the timing of displaying images and music, for example, consideration of giving a story to the entire flow of the motion picture or consideration of outputting images that match the music at a good timing.

Japanese Patent Application Laid-Open No. 2004-96617, however, shows a method for editing a video by using only the tempo information from music, and does not state a method using the characteristics of the music other than the tempo information. In National Publication of International Patent Application No. 2005-506643, though it is possible to create a movie synchronized with music, what image is to be outputted at what timing is not stated.

Therefore, the object of the present invention is to greatly improve the quality of an output motion picture by not only simply synchronizing the motion picture with the characteristic points of music but also causing the attributes of images to be synchronous.

In order to solve the above problems, the method for generating a scenario for a music-and-image-synchronized motion picture includes the steps of: extracting characteristics of music; extracting structure of the music on the basis of the extracted characteristics of the music and dividing the music into multiple components on the basis of the result of the extraction; analyzing characteristics of images; associating the music and the images with each other according to the characteristics corresponding to the components of the music and the characteristics of the images; and a generating a motion picture scenario that enables the associated music and images to be synchronously reproduced.

According to this invention, since a component of music and images are associated with each other according to the characteristics of the images, it is possible to synchronously reproduce images that match the contents of music being reproduced, in comparison with the conventional synchronous reproduction.

The method may further include the steps of: classifying images with common or similar characteristics into the same image group; associating phrases of the music and image groups with each other according to the characteristics of the phrases of the music and the characteristics of the image groups; and according to the characteristics of beats or up beats of a component of the music and the characteristics of each of the images included in the image group associated with the component of the music, associating the beats or up beats of the component of the music and the images with each other.

The characteristics of the image may include an evaluation value about blur of the image; and the method may further include the step of excluding an image to be associated with the component of the music on the basis of the evaluation value.

The method may further include the step of generating a motion picture that is reproducible in synchronization with the music on the basis of the motion picture scenario.

The method may further include the step of reproducing the generated motion picture.

A program for generating a scenario for a music-and-image-synchronized motion picture, which is for causing an arithmetic unit to execute the method for generating a scenario for a music-and-image-synchronized motion picture described above is also included in the present invention.

An apparatus for generating a scenario for a music-and-image-synchronized motion picture is also included in the present invention, which is provided with a storage device that stores the program for generating a scenario for a music-and-image-synchronized motion picture described above, and an arithmetic unit that executes the program for generating a scenario for a music-and-image-synchronized motion picture stored in the storage device.

According to this invention, since a component of music and images are associated with each other according to the characteristics of the images, it is possible to synchronously reproduce images that match the contents of music being reproduced, in comparison with the conventional synchronous reproduction.

### BRIEF DESCRIPTION OF THE DRAWINGS

Fig. 1 is a block diagram of a scenario creation apparatus;
Fig. 2 is a block diagram of an image processing device;
Fig. 3 is a flowchart showing the flow of scenario generation processing according to a first embodiment;
Fig. 4 is a diagram showing an example of association between the components of music and image groups (association between the phrases of music and the events of images);
Fig. 5 is a diagram showing an example of association between the components of music and image groups (association between a catchy part of music and a similar image group);
Fig. 6 is a diagram showing an example of association between the components of music and image groups (association between each phrase and each similar image group);
Fig. 7 is a diagram showing an example of association between the components of music and image groups (association between catchy parts of music and an image group for catchy part);
Fig. 8 is a diagram showing an example of association between a beat or an up beat and an image;
Fig. 9 is a diagram showing an example of a scenario;
Fig. 10 is a flowchart showing the flow of scenario generation processing according to a second embodiment;
Fig. 11 is a block diagram of a motion picture creation apparatus;
Fig. 12 is a flowchart showing the flow of motion picture generation processing; and
Fig. 13 is a block diagram of a motion picture output apparatus.

### DETAILED DESCRIPTION OF THE PREFERRED EMBODIMENTS

### <First embodiment>

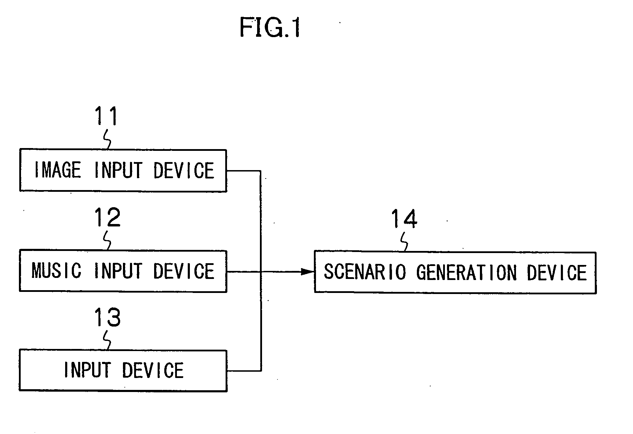

Fig. 1 is a block diagram of a scenario creation apparatus according to a preferred embodiment of the present invention.

An image input device 11 is for inputting an image group required for generating a scenario, and it is, for example, a memory card reader.

A music input device 12 is for inputting music required for generating a scenario, and it is, for example, a memory card reader.

An input device 13 is used by a user to perform various operations of the system, and it is, for example, a keyboard and a mouse.

A scenario generation device 14 is for analyzing inputted music, generating a scenario or selecting an image.

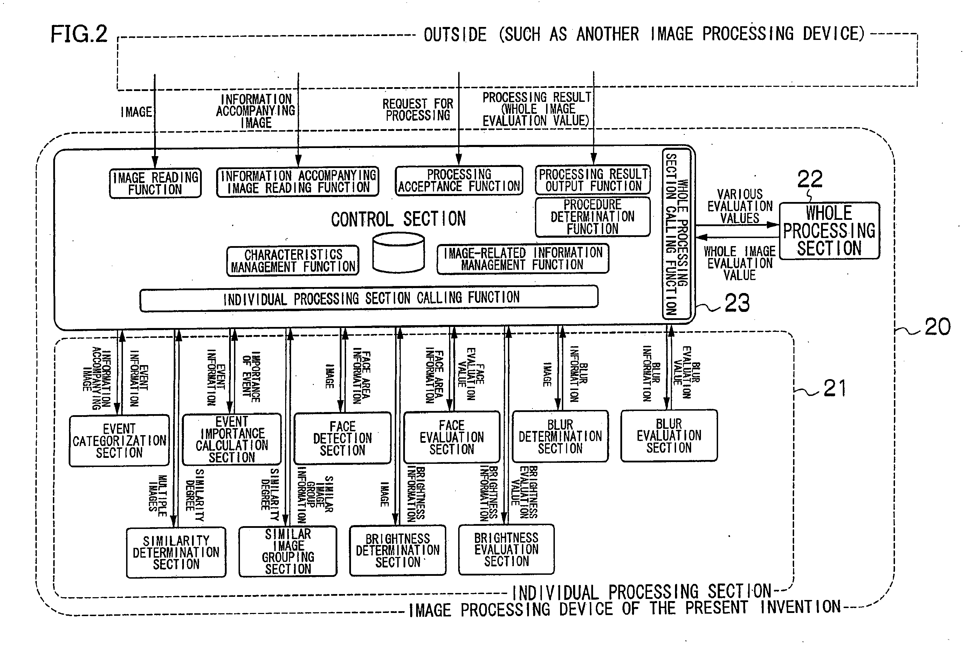

Fig. 2 is a block diagram of an image processing device 20 included in the scenario generation device 14. The image processing device 20 is mainly provided with an individual processing section 21 that includes multiple processing modules, a whole processing section 22 and a control section 23.

The individual processing section 21 has a function of calculating characteristics or an individual evaluation value with the use of at least any one of an image and various information (an image-taking date and the like) accompanying the image. In this case, the "characteristics" refers to information about input of an image or an image group from which a unique/absolute result can be obtained (for example, blur information indicating the strength of the edge of an image). The "individual evaluation value" refers to such ambiguous/relative information about input of an image or an image group that the result obtained therefrom may differ according to the taste of users (for example, a blur estimation value indicating the degree of evaluation of the image from the viewpoint of blur). An example of the individual processing section will be shown in Table 1 below.

**[Table 1]**

| Examples of individual processing section | Description of functions |
|---|---|
| Event categorization section | Performs grouping of images using image-taking time included in information accompanying the images and calculates event information (an example of characteristics) about image groups |
| Event importance calculation section | Calculates the importance of an event (an example of individual evaluation values) using event information or similar image group information (characteristic) |
| Similarity determination section | Calculates, from multiple images, similarity (characteristic) among the images |
| Similar image grouping section | Calculates similar image group information (characteristic) using the similarity among images |
| Face detection section | Detects, from an image, a person's face shown in the image and calculates face information (characteristic) |
| Face evaluation section | Calculates, from face information, a face evaluation value (individual evaluation value) of the image, which indicates an evaluation value from the viewpoint of a face |
| Brightness determination section | Calculates, from an image, brightness information (characteristic) about the image |
| Blur determination section | Calculates, from an image, blur information (characteristic) about the image |
| Blur evaluation value | Calculates, from bright information, a blur evaluation value (individual evaluation value) of the image, which indicates an evaluation value from the viewpoint of blur of the image |

The whole processing section 22 has a function of calculating a whole image evaluation value on the basis of the total of a part or all of the above characteristics, the total of a part or all of the above individual evaluation values or the total of a part or all of the above characteristics and the above individual evaluation values.

For example, the whole image evaluation value (numeric value indicating whether the image is suitable for a particular purpose such as printing) of a particular image is calculated on the basis of the three numeric values of the event information (characteristic), the face evaluation value (individual evaluation value) and the brightness evaluation value (individual evaluation value).

However, this embodiment is not on the assumption that an image is printed. Therefore, if evaluation of the whole image is not necessary, the whole processing section 22 may not be provided.

The control section 23 has an interface between the image processing device 20 and external equipment (other image processing devices or operation devices to be operated by the operator) and is responsible for controlling the individual processing section 21 and the whole processing section 22 to perform processing.

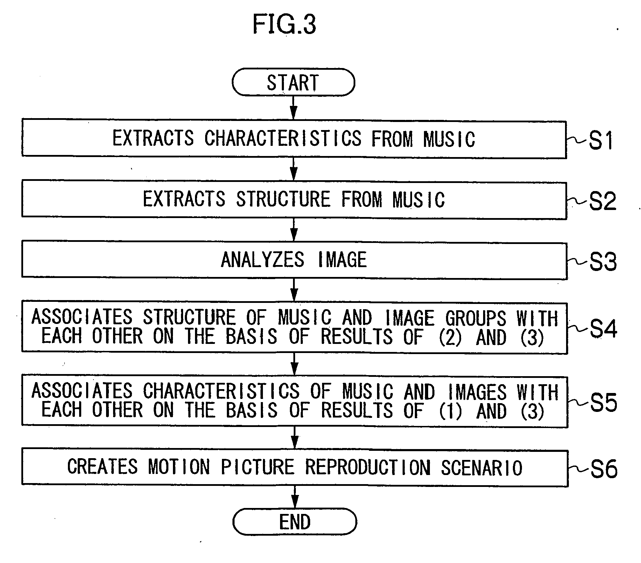

The flow of the motion picture scenario generation processing executed by the motion picture scenario creation apparatus will be described below with reference to the flowchart in Fig. 3.

At step S1, characteristics are extracted from music. The characteristics of music refer to beats and up beats, accents, points of change in tempo and the like of the music. A conventional method can be used as the method for extracting the characteristics of music. For example, the methods disclosed in Japanese Patent Application Laid-Open No. 2003-263162 and Japanese Patent Application Laid-Open No. 2005-027751 may be used.

At step S2, the structure of the music (this may be also included in the characteristics of the music) is extracted, and the music is divided into multiple portions in accordance with the extracted structure. For example, the following division method is conceivable.
(1) The structure is separated at a position where the tempo changes.
(2) The structure is separated as eight beats considered to be one component from the top beat.
(3) The structure is separated into so-called "phrases" such as A melody, B melody and a catchy part.
(4) The structure is separated by regarding four beats as one component in the case of music with a tempo equal to or above a certain threshold, and eight beats as one component in the case of music with a tempo equal to or below the certain threshold.

A conventional method can be used as the method for acquiring a phrase. For example, the methods disclosed in Japanese Patent Application Laid-Open No. 09-90978 and Japanese Patent Application Laid-Open No. 2004-233965 may be used.

At step S3, images are analyzed. The analysis of the images is performed by the image processing device 20.

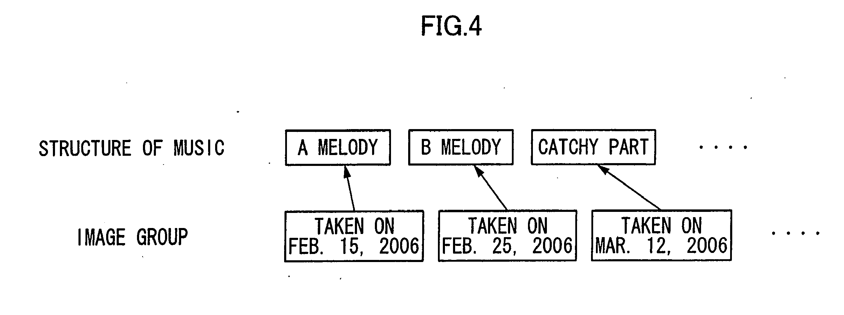

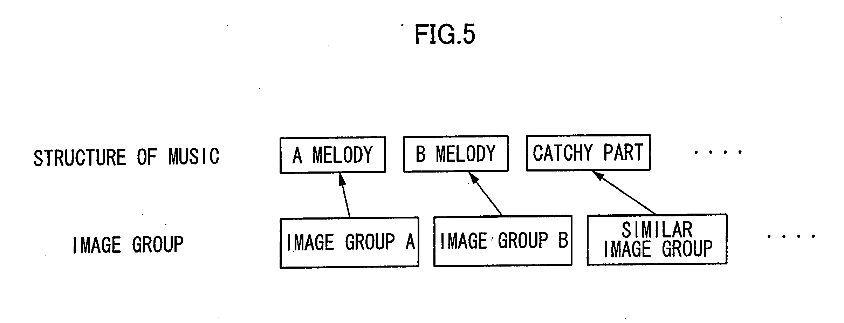

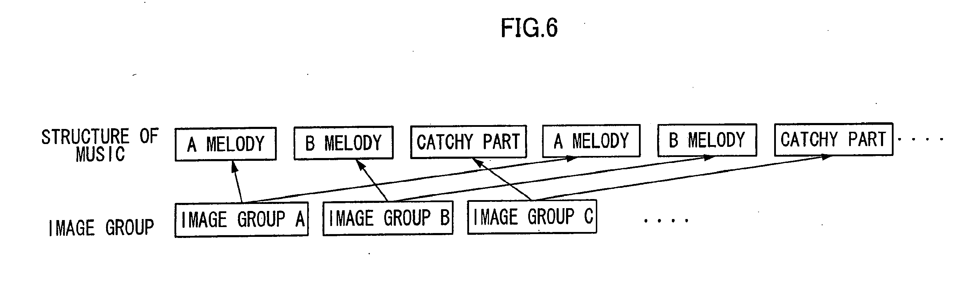

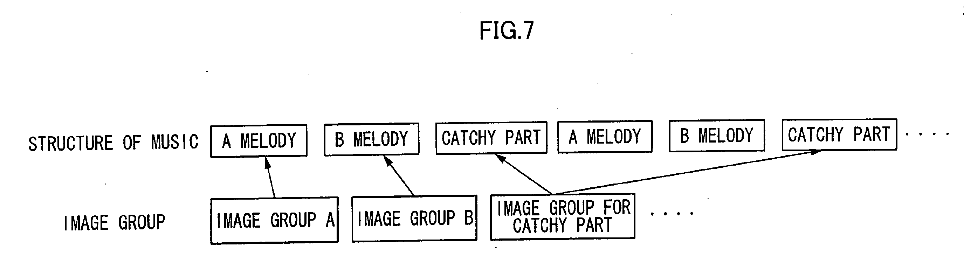

At step S4, the components of the music and the image groups are associated with each other on the basis of the result of analysis at steps S2 and S3. That is, the characteristics of the structure of the music determined at step S2 (such as the order of appearance of the components in the music, and A melody, B melody and a catchy part) and the characteristics of the image groups determined at step S3 (event information or an image-taking date common to images belonging to a particular image group) are checked against each other and associated with each other on the basis of the checking result. The following are specific examples of the association.
Example 1) Both are associated with each other by sequentially applying groups of images which have been grouped according to time series by categorization based on whether the event targeted by the image taking is the same or not, for example, categorization in which images accompanied by information indicating the same image-taking date are categorized into the same image group, to the respective phrases from the top component of the music (see Fig. 4). Since a group of images having the same or similar attribute (such as an image-taking date) (a similar image group) is assigned to a phrase, it is possible to create a scenario for reproducing a motion picture in which images are naturally switched at separation positions of the music.
Example 2) Each similar image group is associated with each component of music (see Fig. 5). Since the similar images are switched for each component of the music, it is possible to generate a scenario for reproducing a varied motion picture.
Example 3) The same image group is associated with the same phrase (see Fig. 6). By repeatedly using the same image group, it is possible to generate a scenario for reproducing a motion picture harmonized with the music.
Example 4) An image group having predetermined characteristics appropriate for the catchy part of the music is associated with the catchy part (see Fig. 7).

For example, the following are conceivable as the image group having characteristics appropriate for a catchy part.
(1) An image group with the highest brightness
(2) A group of images taken at the latest event (or on the latest image-taking date)
(3) A group of images in which a user registered in advance is shown as a subject

Any of the examples as described above or a combination of a part or all of them is identified as the image group having characteristics appropriate for the catchy part and associated with the catchy part.

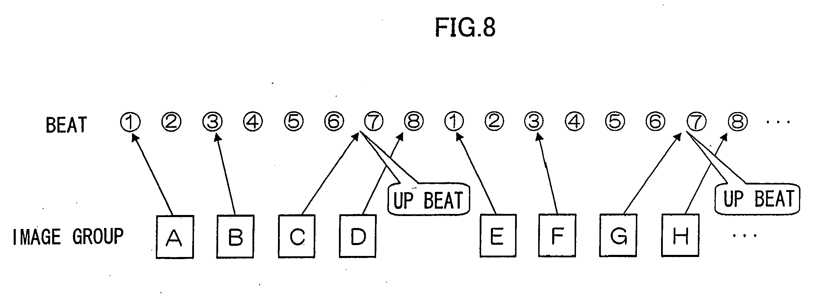

At step S5, the beats or up beats determined at step S1 are checked against the characteristics of each image determined at step S3. In accordance with the result, the beats or up beats in each component are associated with the respective images belonging to the image group associated with the component. The following are conceivable as specific examples.
Example 1) The respective images of a corresponding image group are associated with the beats or the up beats in a manner that the images are sequentially displayed synchronously with the beats or the up beats.
Example 2) In addition to the method of Example 1, a particular image or an image selected at random is repeatedly used if the number of images in an image group is smaller than the number of beats in a phrase.
Example 3) For an image group to which images with a face extracted therein belong, a display effect, such as zoom-out or zoom-in of the face, is provided synchronically with the beats or the up beats.
Example 4) As for a beat to be accented, the brightest image in the image group that corresponds to the component of the music which includes the beat is identified and associated with the beat.
Example 5) All the beats extracted from the music are not used. A pattern is determined, and images are assigned in accordance with the pattern. For example, the structure of the music is separated every eight beats, and an image is displayed at the first beat, the third beat, the sixth up-beat and the eighth beat, as shown in Fig. 8. By increasing and repeating such a pattern, it is possible to avoid monotonous image switching. By combining the examples described above, images are assigned to all the components of the music.

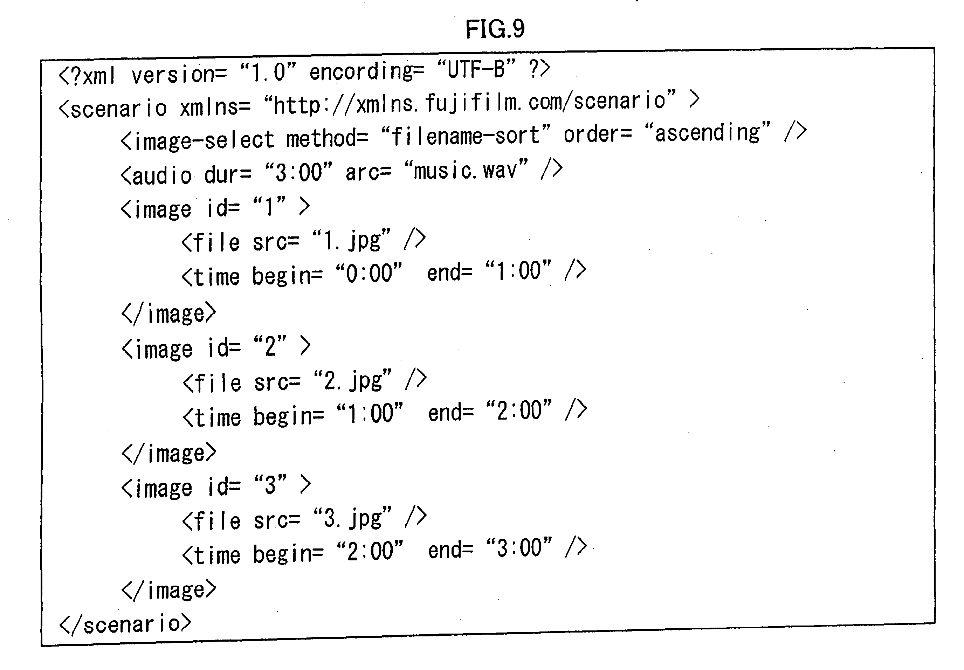

At step S6, a motion picture reproduction scenario is created. The form of the scenario does not matter. For example, XML (Extensible Markup Language) as shown in Fig. 9 may be used. SMIL (Synchronized Multimedia Integration Language) or a binary form may be used. In the scenario, a method for selecting an image, time for displaying the selected image and the like are described. By displaying the images on the basis of the scenario, a motion picture synchronized with the music can be reproduced.

### <Second embodiment>

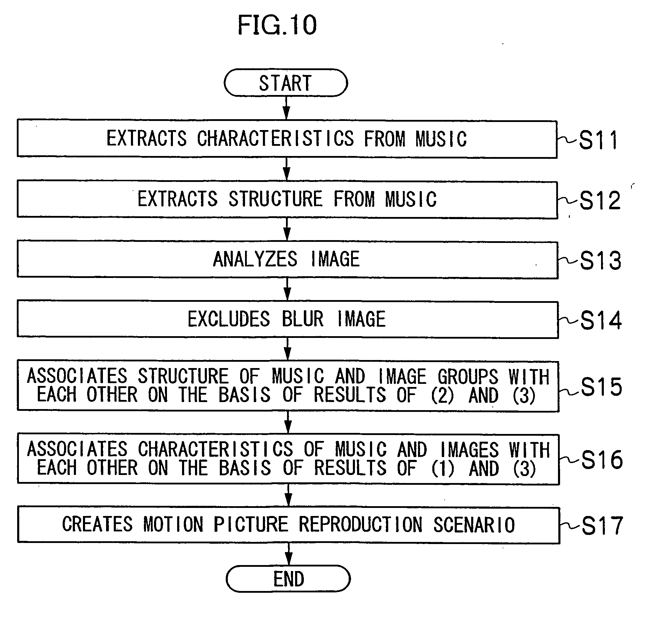

Fig. 10 is a flowchart showing the flow of motion picture scenario generation processing according to a second embodiment.

Steps S11 to S13 and S 15 to S 17 are similar to steps S1 to S3 and S4 to S6 of the first embodiment, respectively.

However, at step S 14, such images that the blur evaluation value obtained from the image analysis at step S13 is higher than a predetermined value are excluded from the image groups to be associated with the components of the music. In the processing at step S16, the images excluded at step S 13 are not associated.

Since blurred low-quality images can be excluded from a motion picture, it is naturally possible to generate a scenario for reproducing a high-quality motion picture.

If the number of images is insufficient as a result of the exclusion of the images, an image with a low blur evaluation value may be repeatedly used to make up for the lack.

### <Third embodiment>

An apparatus that creates a motion picture on the basis of a scenario created as described above is also included in the present invention.

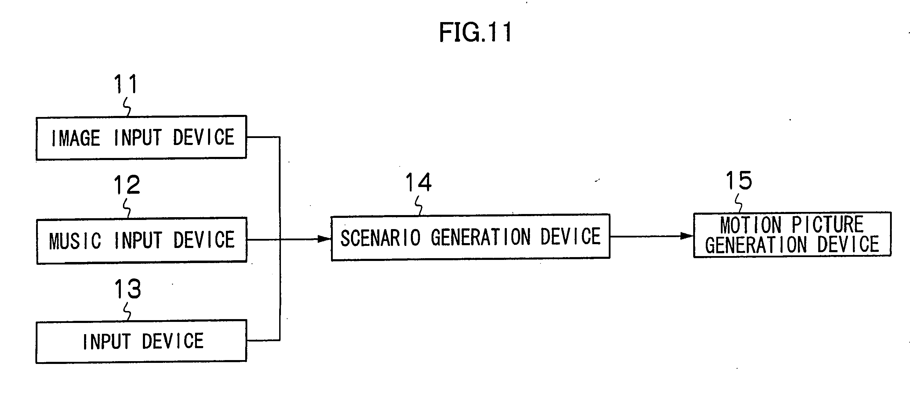

Fig. 11 is a block diagram of a motion picture creation apparatus according to a preferred embodiment of the present invention.

Similarly to the scenario creation apparatus (Fig. 1), this apparatus is provided with an image input device 11, a music input device 12, an input device 13 and a scenario generation device 14. It is further provided with a motion picture generation device 15.

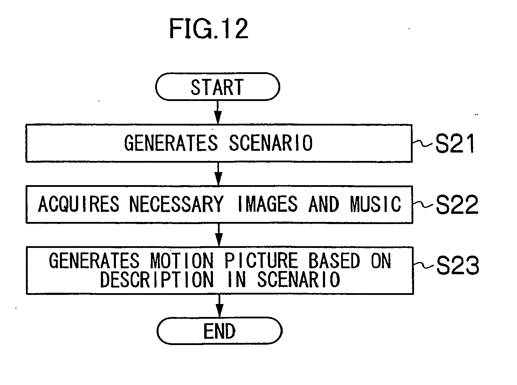

Fig. 12 is a flowchart showing the flow of motion picture generation processing.

At step S21, a scenario is generated by the scenario generation device 14 (for example, an XML file as shown in Fig. 9).

At step S22, the motion picture generation device 15 acquires images and music required for generation of a motion picture, which are specified in the scenario, from among images and pieces of music inputted in the image input device 11 and the music input device 12, respectively. The data specified in the scenario is, for example, data stored in a PC or data published on the Web.

At step S23, the motion picture generation device 15 generates a motion picture from the acquired images and music on the basis of the description in the scenario. Specifically, for all the acquired image data, the motion picture generation device 15 performs image processing in consideration of effect or change at certain moments and overlaps the image data in accordance with an order to create frame images. By connecting the frame images in order of time, a motion picture is created. Any compression-recording method, such as animation GIF and MPEG, may be used to compressedly record the created motion picture.

### <Fourth embodiment>

A motion picture output apparatus for reproduction output of the motion picture created as described above is also included in the present invention.

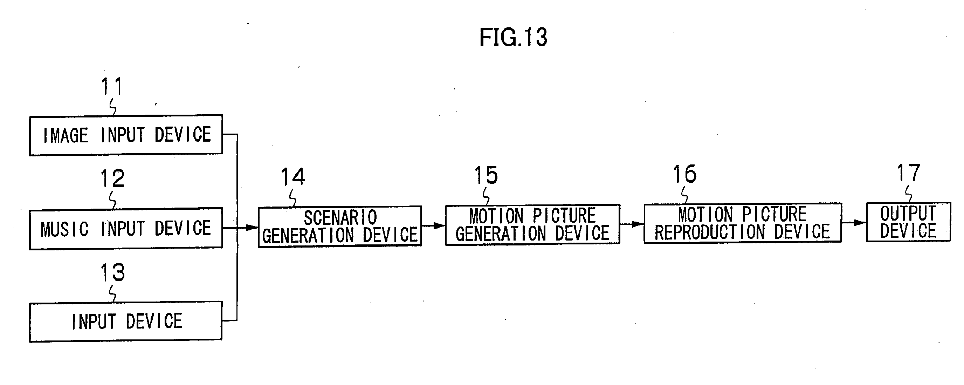

Fig. 13 is a block diagram of a motion picture output apparatus according to a preferred embodiment of the present invention. Similarly to the motion picture creation apparatus (Fig. 11), the motion picture output apparatus is provided with an image input device 11, a music input device 12, an input device 13, a scenario generation device 14 and a motion picture generation device 15. It is further provided with a motion picture reproduction device 16 and an output device 17.

The motion picture reproduction device 16 is a device that converts a motion picture generated by the motion picture generation device 15 to a reproduction signal for the output device 17. For example, a motion picture player such as a network media player operating on a personal computer and an MPEG decoder are given as examples of the motion picture reproduction device 16.

The output device 17 is a device that outputs a motion picture on the basis of a reproduction signal from a motion picture reproduction device 16 and outputs the voice of music. For example, a display and a speaker are given as examples of the output device 17.

## Claims

1. A method for generating a scenario for a music-and-image-synchronized motion picture, the method comprising the steps of:
extracting (S1) characteristics of music;
extracting (S2) structure of the music on the basis of the extracted characteristics of the music and dividing the music into multiple components on the basis of the result of the extraction;
analyzing (S3) characteristics of images;
associating (S4, S5) the music and the images with each other according to the characteristics corresponding to the components of the music and the characteristics of the images; and
generating (S6) a motion picture scenario that enables the associated music and images to be synchronously reproduced.

2. The method for generating a scenario for a music-and-image-synchronized motion picture according to claim 1, further comprising the steps of:
classifying images with common or similar characteristics into the same image group;
associating phrases of the music and image groups with each other according to the characteristics of the phrases of the music and the characteristics of the image groups; and
according to the characteristics of beats or up beats of a component of the music and the characteristics of each of the images included in the image group associated with the component of the music, associating the beats or up beats of the component of the music and the images with each other.

3. The method for generating a scenario for a music-and-image-synchronized motion picture according to claim 1 or 2, wherein
the characteristics of the image include an evaluation value about blur of the image; and
the method further comprises the step of excluding (S 14) an image to be associated with the component of the music on the basis of the evaluation value.

4. The method for generating a scenario for a music-and-image-synchronized motion picture according to any of claims 1 to 3, further comprising the step of generating a motion picture that is reproducible in synchronization with the music on the basis of the motion picture scenario.

5. The method for generating a scenario for a music-and-image-synchronized motion picture according to claim 4, further comprising the step of reproducing the generated motion picture.

6. A program for generating a scenario for a music-and-image-synchronized motion picture, which is for causing an arithmetic unit to execute the method for generating a scenario for a music-and-image-synchronized motion picture according to any of claims 1 to 5.

7. An apparatus (14) for generating a scenario for a music-and-image-synchronized motion picture, the apparatus comprising:
a storage device (20) that stores the program for generating a scenario for a music-and-image-synchronized motion picture according to claim 6; and
an arithmetic unit (20) that executes the program for generating a scenario for a music-and-image-synchronized motion picture stored in the storage device.
